# EUROPEAN PATENT APPLICATION

(11) **EP 2 650 473 A1**
(43) Date of publication of application: **16.10.2013**
(21) Application number: 11846316.5
(22) Date of filing: 24.01.2011
(51) Int. Cl.: F01D 1/06, F01K 7/18, F01K 25/06

(54) **RADIAL TURBINE**

(30) Priority: 07.12.2010 JP 2010272764
(71) Applicant: Mitsubishi Heavy Industries, Ltd., Tokyo 108-8215 (JP)
(72) Inventor: HIGASHIMORI, Hirotaka, Nagasaki-shi Nagasaki 851-0392 (JP); FUKUDA, Norihiro, Tokyo 108-8215 (JP); KAWAMI, Masayuki, Tokyo 108-8215 (JP); FUJII, Atsushi, Tokyo 108-8215 (JP)
(74) Representative: HOFFMANN EITLE
(86) International application number: PCT/JP2011/051254
(87) International publication number: WO 2012/077359

(57) **Abstract**

The present invention provides a radial turbine which uses a fluid having a plurality of pressures in a single turbine wheel, to thereby reduce the number of components and lower the cost. A radial turbine (100) includes a single radial turbine wheel (15) which converts, into rotational power, swirling energy of a swirling fluid with a first pressure that flows into the radial turbine wheel (15) from a main inlet (21) formed at an outer circumferential end through a nozzle (27) with a radial flow velocity component, wherein a sub inlet (29) is formed on an outer circumferential side of the radial turbine wheel (15) at a position radially and axially apart from the main inlet (21), and the low-boiling-point medium whose pressure decreases from the first pressure as the low-boiling-point medium travels to a radial inner side flows into the sub inlet (29) through a nozzle (35).

## Description

### {Technical Field}

The present invention relates to a radial turbine.

### {Background Art}

Radial turbines are respectively provided with a single turbine wheel which converts, into rotational power, swirling energy of a flow of a swirling fluid that flows into the turbine wheel with a radial flow velocity component as a main component, and axially discharges the flow from which the energy has been removed. The radial turbines thereby convert energy of a fluid having a middle to low temperature/a high temperature and a high pressure into rotational power. The radial turbines have been widely used in, for example, power recovery of discharge energy discharged as a high-temperature and high-pressure fluid from various industrial plants, waste heat recovery in systems which obtain power via a heat cycle such as a power source for ships and vehicles, and power recovery in binary cycle power generation which uses a middle to low temperature heat source such as geothermal energy and OTEC.

When various energy sources have a plurality of pressures, a plurality of turbines are used. That is, one turbine is used for each of the pressure sources as disclosed in PTL 1. Alternatively, two turbine wheels may be provided on one shaft.
This is because each radial turbine is designed based on optimum conditions for each fluid pressure. For example, when a gravitational acceleration is g, a head is H, and a circumferential velocity at an inlet of a turbine wheel is U, an inlet radius R of a radial turbine is determined by the relationship of g•H≈U². That is, when the number of rotations of the turbine wheel is N(rpm), a value in the vicinity of R≈U/2•π/(N/60) is set as the inlet radius R.

For example, PTL 2 discloses a radial turbine in which one inlet flow passage is divided by a partition wall as a radial turbine which uses a fluid with large flow fluctuation. In the radial turbine, however, the inlet size is changed according to a flow rate of a fluid having one pressure.

### {Citation List}

### {Patent Literature}

{PTL 1} Japanese Unexamined Patent Application, Publication No. Hei01-285607
{PTL 2} Japanese Unexamined Patent Application, Publication No. So63-302134

### {Summary of Invention}

### {Technical Problem}

When the plurality of turbines are used as disclosed in PTL 1, the manufacturing cost increases, and a large installation space is required.
Also, when the plurality of turbine wheels are provided on one shaft, the structure becomes complicated due to a large number of turbine components, and the manufacturing cost increases.

In view of such circumstances, it is an object of the present invention to provide a radial turbine which uses a fluid with a plurality of pressures in a single turbine wheel, to thereby reduce the number of components and lower the cost. The structure may be also applied to a mixed flow turbine.

### {Solution to Problem}

To solve the problems, the present invention employs the following solutions.
That is, one aspect of the present invention is a radial turbine including a single turbine wheel which converts, into rotational power, swirling energy of a swirling fluid with a first pressure that flows into the turbine wheel from a main inlet formed at an outer circumferential end through a high-speed swirling flow generating flow passage such as a nozzle and a scroll with a radial flow velocity component as a main component, wherein a plurality of sub inlets are formed on an outer circumferential side of the turbine wheel at positions radially and axially apart from the main inlet and each other, and fluid whose pressure gradually decreases from the first pressure as fluid travels to a radial inner side flows into each of the sub inlets through a high-speed swirling flow generating flow passage such as a nozzle and a scroll.

In accordance with the present aspect, the fluid with the first pressure, which is a highest pressure, passes through the high-speed swirling flow generating flow passage such as a nozzle and a scroll, and a flow rate and a flow velocity thereof are adjusted therein. The fluid is introduced into the outer circumferential end of the turbine wheel from the main inlet. The fluid introduced from the main inlet flows out of the turbine wheel with the pressure being gradually reduced through the turbine wheel. The fluid thereby generates power on a rotating shaft to which the turbine wheel is mounted.
The plurality of sub inlets are formed on the outer circumferential side of the turbine wheel, i.e., on a shroud side, at the positions radially and axially apart from the main inlet and each other. Fluid whose pressure gradually decreases from the first pressure as fluid travels to the radial inner side flows into each of the sub inlets through the high-speed swirling flow generating flow passage such as a nozzle and a scroll. Accordingly, a flow rate and a flow velocity of the fluid whose pressure gradually decreases are adjusted by the nozzle. The fluid is thereby introduced into each of the sub inlets. The fluid introduced from each of the sub inlets is mixed with the fluid introduced from the main inlet and the sub inlet on an upstream side. The fluid flows out of the turbine wheel with the pressure being gradually reduced. The fluid thereby generates power on the rotating shaft to which the turbine wheel is mounted.

In the above case, each of the sub inlets is preferably placed at such a position that the pressure of the fluid introduced from the sub inlet corresponds to the pressure of the fluid flowing through the turbine wheel since the pressure gradually decreases toward an outlet.
Since a casing exists between the main inlet and the sub inlet and between the respective sub inlets, the main inlet and the sub inlet and the respective sub inlets are reliably separated from each other. Thus, leakage of the fluid can be prevented.
As described above, the rotational power can be recovered from the fluid with a plurality of pressures by the single turbine wheel. Accordingly, the number of components can be reduced, and the manufacturing cost can be lowered.

In the radial turbine according to the present aspect, a hub surface at the inlet of the turbine wheel may be inclined.
When the turbine wheel in which the hub surface at the inlet is inclined as described above is used, an axial length of an outer circumferential portion is extended. Thus, a larger space is ensured for the sub inlet, and it becomes easy to place the plurality of sub inlets.
Also, when the nozzle placed at the sub inlet is inclined to the radial direction, the flow of the fluid flowing in from the sub inlet can be made substantially parallel to the flow toward the outlet of the turbine wheel from the upstream side. A mixture loss of the fluid can be thereby reduced. Accordingly, turbine efficiency can be improved.

In the above aspect, a shroud may be provided between the main inlet and the sub inlet located on an outermost side in the turbine wheel.

In the turbine wheel, the pressure is gradually reduced toward the outlet, and the fluid also flows into the turbine wheel from each of the sub inlets placed at the radially-different positions from each other. Thus, as the fluid travels to a downstream side, the fluid has a larger volume flow rate, and a larger blade height is required for swirling the flow. Therefore, the blade height is smallest between the main inlet and the sub inlet located on the outermost side.
Meanwhile, a clearance between the casing and the blade is formed to be substantially constant. Thus, the ratio of the clearance to the blade height is higher between the main inlet and the sub inlet located on the outermost side. Accordingly, a more amount of fluid leaks, and a fluid loss due to the leakage increases to reduce the efficiency.
In the present aspect, since the shroud is placed between the main inlet and the sub inlet located on the outermost side, the leakage loss of the fluid can be reduced at the portion with largest leakage. The turbine efficiency can be thereby improved.

In the above aspect, a shroud may be provided between the respective sub inlets in the turbine wheel.
Also, in the above aspect, a shroud may be provided between the sub inlet located on an innermost side and a discharge section in the turbine wheel.

Accordingly, the shroud can reduce the leakage loss. The turbine efficiency can be thereby improved.

### {Advantageous Effects of Invention}

In accordance with the present invention, the plurality of sub inlets are formed on the outer circumferential side of the turbine wheel at the positions radially and axially apart from the main inlet and each other. Fluid whose pressure gradually decreases from the first pressure as fluid travels to the radial inner side flows into each of the sub inlets through the nozzle. Thus, the rotational power can be recovered from the fluid with the plurality of pressures by the single turbine wheel. Accordingly, the number of components can be reduced, and the manufacturing cost can be lowered.

### {Brief Description of Drawings}

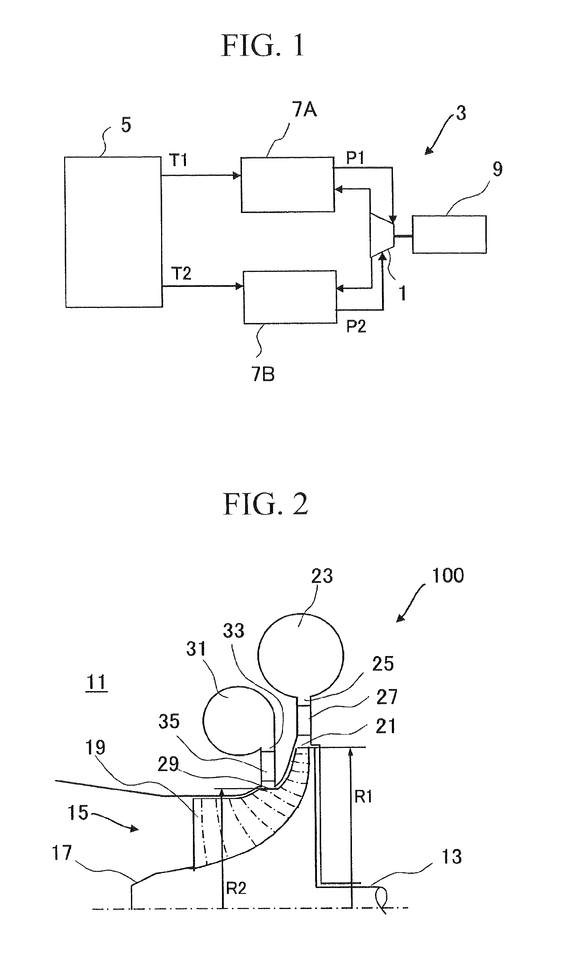

### {Fig. 1}

Fig. 1 is a block diagram illustrating the configuration of a binary power generation system in which an expansion turbine according to a first embodiment of the present invention is used.

### {Fig. 2}

Fig. 2 is a partial sectional view of a radial turbine applied as the expansion turbine in Fig. 1.

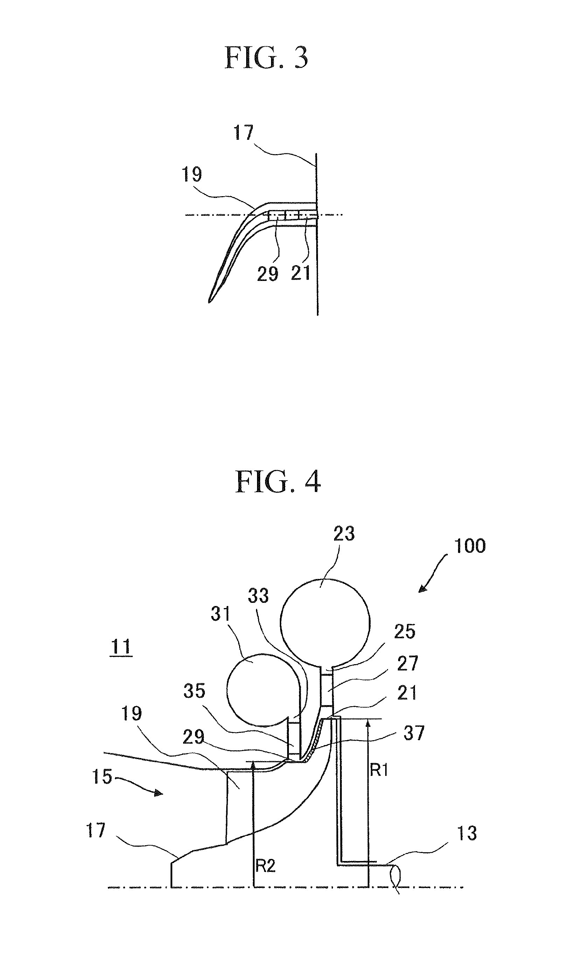

### {Fig. 3}

Fig. 3 is a projection view illustrating a state in which a radial blade in Fig. 2 is projected onto a cylindrical surface.

### {Fig. 4}

Fig. 4 is a partial sectional view illustrating another aspect of the radial turbine according to the first embodiment of the present invention.

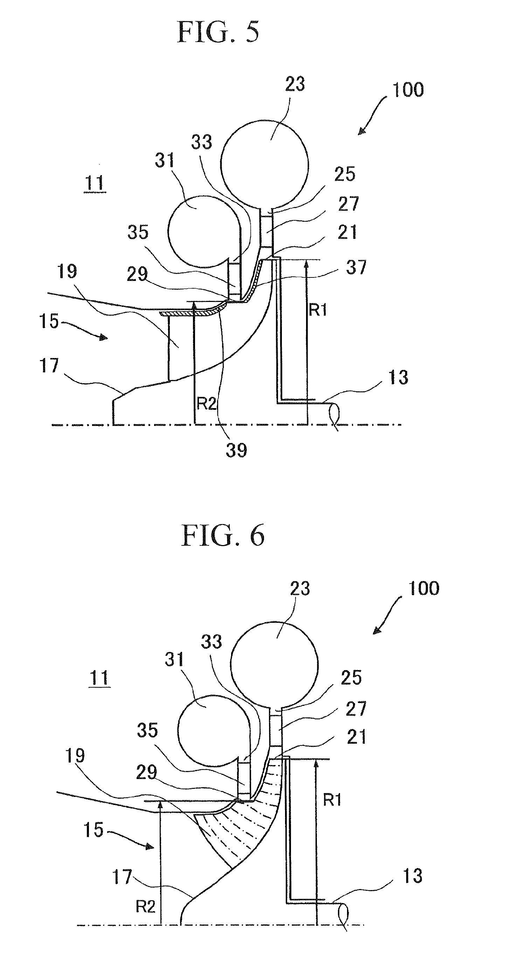

### {Fig. 5}

Fig. 5 is a partial sectional view illustrating yet another aspect of the radial turbine according to the first embodiment of the present invention.

### {Fig. 6}

Fig. 6 is a partial sectional view illustrating yet another aspect of the radial turbine according to the first embodiment of the present invention.

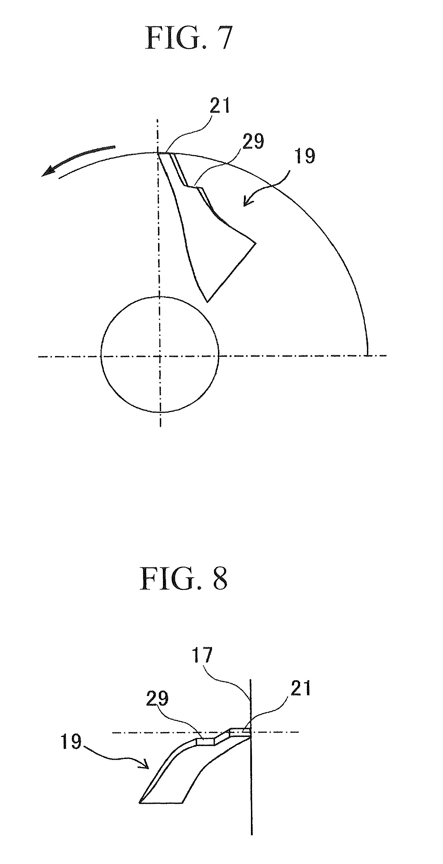

### {Fig. 7}

Fig. 7 is a front view of a radial blade in Fig. 6 as viewed from an axial direction.

### {Fig. 8}

Fig. 8 is a projection view illustrating a state in which the radial blade in Fig. 6 is projected onto a cylindrical surface.

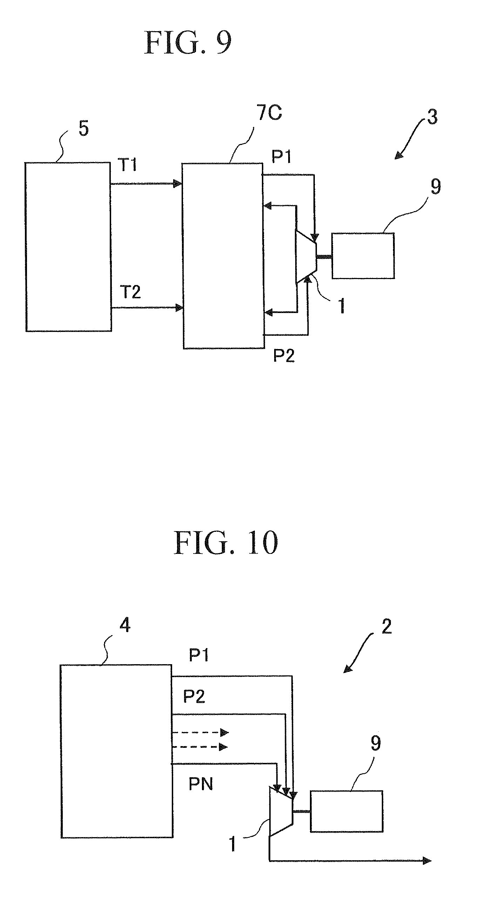

### {Fig. 9}

Fig. 9 is a block diagram illustrating another configuration of the binary power generation system in which the expansion turbine according to the first embodiment of the present invention is used.

### {Fig. 10}

Fig. 10 is a block diagram illustrating the configuration of a plant system in which the expansion turbine according to the first embodiment of the present invention is used.

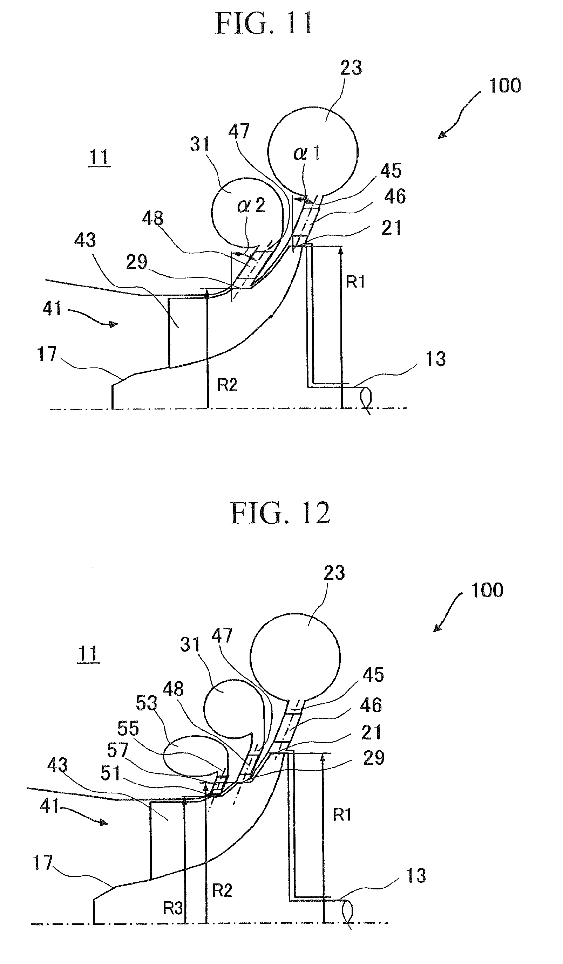

### {Fig. 11}

Fig. 11 is a partial sectional view illustrating a radial turbine according to a second embodiment of the present invention.

### {Fig. 12}

Fig. 12 is a partial sectional view illustrating another aspect of the radial turbine according to the second embodiment of the present invention.

### {Description of Embodiments}

In the following, embodiments of the present invention will be described in detail by using the drawings.

### {First Embodiment}

In the following, a radial turbine 100 according to a first embodiment of the present invention will be described by reference to Figs. 1 to 3.
Fig. 1 is a block diagram illustrating the configuration of a binary power generation system in which an expansion turbine according to the first embodiment of the present invention is used. Fig. 2 is a partial sectional view illustrating a radial turbine shape in a case in which a radial turbine according to the present invention is used as the expansion turbine in Fig. 1. Fig. 3 is a projection view illustrating a state in which a radial blade in Fig. 2 is projected onto a cylindrical surface.

A binary power generation system 3 is used as a system which performs, for example, geothermal power generation. The binary power generation system 3 includes a heat source section 5 having a plurality of heat sources, two binary cycles 7A and 7B, an expansion turbine 1, and a generator 9 that generates electric power by rotational power of the expansion turbine 1.

The heat source section 5 supplies vapor or hot water heated by geothermal energy to the binary cycles 7A and 7B. The heat source section 5 is adapted to supply two types of vapor or hot water having different temperatures T1 and T2 and different pressures.
Each of the binary cycles 7A and 7B is composed of a Rankine cycle in which a low-boiling-point medium (fluid) as a working fluid is swirled. Examples of the low-boiling-point medium include an organic medium such as isobutane, CFCs, CFC substitutes, ammonia, and a fluid mixture of ammonia and water.

In the binary cycles 7A and 7B, the low-boiling-point medium is heated to a high-pressure fluid by the high-temperature vapor or the hot water from the heat source section 5, and is supplied to the expansion turbine 1. The low-boiling-point medium discharged from the expansion turbine 1 is returned to the binary cycles 7A and 7B, and is heated by the high-temperature vapor or the hot water again. The procedure is repeated in sequence.
At this point, the same low-boiling-point media are used in the two binary cycles 7A and 7B. Since the high-temperature vapor or the hot water supplied to the binary cycle 7A and that supplied to the binary cycle 7B have different temperatures, pressures P1 and P2 of the low-boiling-point media supplied to the expansion turbine 1 therefrom differ from each other. The pressure P1 is higher than the pressure P2.

The radial turbine 100 includes a casing 11, a rotating shaft 13, and a radial turbine wheel (a turbine wheel) 15. The rotating shaft 13 is rotatably supported on the casing 11. The radial turbine wheel 15 is mounted to an outer circumference of the rotating shaft 13.
The radial turbine wheel 15 is composed of a hub 17 and a plurality of radial blades 19. The hub 17 is mounted to the outer circumference of the rotating shaft 13. The plurality of radial blades 19 are radially provided at intervals on an outer circumferential surface of the hub 17.

A main inlet 21 is formed at an outer circumferential end of the radial turbine wheel 15 over the entire circumference at the position of a radius R1. A main inflow passage 23 is formed on the outer circumferential side from the main inlet 21 at one end of an inlet flow passage 25. The inlet flow passage 25 is an annular space into which the low-boiling-point medium having the pressure P1 from the binary cycle 7A is introduced. The main inflow passage 23 and the main inlet 21 are connected via the inlet flow passage 25.
A nozzle 27 is provided at the inlet flow passage 25. The nozzle 27 is composed of a plurality of blades that are circumferentially arranged at intervals, and thereby generates a high-speed swirling flow.
A high-speed swirling flow generating flow passage such as a scroll without a nozzle blade may be also used to generate the high-speed swirling flow.

A sub inlet 29 is formed on the outer circumferential (a shroud) side of the radial turbine wheel 15 at a position radially and axially apart from the main inlet 21. A sub inflow passage 31 is formed on the outer circumferential side from the sub inlet 29 at one end of an inlet flow passage 33 at the position of a radius R2. The inlet flow passage 33 is an annular space into which the low-boiling-point medium having the pressure P2 from the binary cycle 7B is introduced. The sub inflow passage 31 and the sub inlet 29 are connected via the inlet flow passage 33.
A nozzle 35 is provided at the inlet flow passage 33. The nozzle 35 is composed of a plurality of blades that are circumferentially arranged at intervals.

In Fig. 2, a constant-pressure line of the fluid passing through the radial turbine wheel 15 is indicated by an alternate long and short dash line.
The radius R2 is set such that the pressure of the fluid supplied from the sub inlet 29 is substantially the same as the pressure of the fluid passing through the position of the sub inlet 29 in the radial turbine wheel 15.

Fig. 3 is a projection view illustrating a state in which the radial blade in Fig. 2 is projected onto a cylindrical surface.
The radial blade 19 has a radial blade shape in which a portion around the main inlet 21 on the hub 17 side is substantially aligned with the rotating shaft 13. In the blade shape, the blade separates from the rotating shaft 13 in a parabolic fashion toward an outlet of the radial turbine wheel 15.
The main inlet 21 and the sub inlet 29 are formed in the portion of the radial blade 19 that is substantially aligned with the rotating shaft 13.
The sub inlet 29 may be formed in the portion where the blade separates from the rotating shaft 13 in a parabolic fashion.

In the following, the operation of the radial turbine 100 according to the present embodiment having the above configuration will be described.
The low-boiling-point medium having the pressure P1 from the binary cycle 7A passes through the inlet flow passage 25 from the main inflow passage 23, and a flow rate and a flow velocity thereof are adjusted by the nozzle 27. The low-boiling-point medium with a flow rate G1 is supplied to the outer circumferential end of the radial turbine wheel 15 from the main inlet 21. At this point, the pressure of the low-boiling-point medium supplied to the radial turbine wheel 15 is PN1. The low-boiling-point medium having the pressure PN1 flows out of the radial turbine wheel 15 with the pressure being continuously reduced to an outlet pressure Pd at the outlet of the radial turbine wheel 15. The low-boiling-point medium thereby generates rotational power on the rotating shaft 13 to which the radial turbine wheel 15 is mounted.

At this point, the low-boiling-point medium having the pressure P2 from the binary cycle 7B passes through the inlet flow passage 33 from the sub inflow passage 31, and a flow rate and a flow velocity thereof are adjusted by the nozzle 35. The low-boiling-point medium with a flow rate G2 is supplied to the radial turbine wheel 15 from the sub inlet 29. At this point, a pressure PN2 of the low-boiling-point medium supplied into the radial turbine wheel 15 from the sub inlet 29 is caused to correspond to the pressure of the low-boiling-point medium flowing through the radial turbine wheel 15 at the position of the sub inlet 29 since the pressure is gradually, in other words, continuously reduced toward the outlet of the radial turbine wheel 15.

The low-boiling-point medium with the flow rate G2 flowing in from the sub inlet 29 is mixed with the low-boiling-point medium with the flow rate G1 from the main inlet 21, and integrally flows out of the outlet of the radial turbine wheel 15. The low-boiling-point medium having a total flow rate of the flow rate G1 and the flow rate G2 generates the rotational power on the rotating shaft 13 via the radial turbine wheel 15.
The rotating shaft 13 is thereby rotationally driven to generate electric power in the generator 9.

Since the low-boiling-point media having the different pressures from the binary cycles 7A and 7B are respectively supplied to the main inlet 21 and the sub inlet 29 of the radial turbine wheel 15 as described above, the rotational power can be recovered by the single radial turbine wheel 15.
Accordingly, in the radial turbine 100 according to the present embodiment, the number of components can be reduced, and the manufacturing cost can be lowered as compared to a plurality of expansion turbines or an expansion turbine having a plurality of radial turbine wheels.

Although a shroud is not provided in the radial turbine wheel 15 in the present embodiment, the present invention is not limited thereto.
For example, a shroud 37 may be mounted to the radial turbine wheel 15 between the main inlet 21 and the sub inlet 29 as shown in Fig. 4.
In this case, a leakage loss of the low-boiling-point medium due to a clearance at the blade tip between the main inlet 21 and the sub inlet 29 can be reduced. Turbine efficiency can be thereby improved.

That is, in the radial turbine wheel 15, the pressure is gradually reduced toward the outlet, and the low-boiling-point medium also flows into the radial turbine wheel 15 from the sub inlet 29. Thus, as the low-boiling-point medium travels to a downstream side, the low-boiling-point medium has a larger volume flow rate, and a larger blade height is required for swirling the flow. Therefore, the blade height is smallest between the main inlet 21 and the sub inlet 29.
Meanwhile, a clearance between the casing 11 and the radial blade 19 is formed to be substantially constant. Thus, the ratio of the clearance to the blade height is higher between the main inlet 21 and the sub inlet 29. Accordingly, a more amount of fluid leaks, and a fluid loss due to the leakage increases to reduce the efficiency.
When the shroud 37 is placed between the main inlet 21 and the sub inlet 29 as shown in Fig. 4, the leakage loss of the low-boiling-point medium can be reduced at the portion with largest leakage. The efficiency of the expansion turbine 1 can be thereby improved.

A shroud 39 may be also provided between the sub inlet 29 (the sub inlet located on an innermost side) and the outlet (a discharge section) of the radial turbine wheel 15 in addition to the shroud 37 as shown in Fig. 5.
In this case, the leakage loss of the low-boiling-point medium can be further reduced. The turbine efficiency can be thereby further improved.
In this case, the shroud 37 may not be provided.

In the present embodiment, the radial blade 19 at a portion around the outlet of the radial turbine wheel 15 is linearly erected in the radial direction. However, the present invention is not limited thereto. For example, the radial blade 19 may be inclined to the radial direction as shown in Fig. 6.
Fig. 7 is a front view of the radial blade in Fig. 6 as viewed from the axial direction. Fig. 8 is a perspective view of the radial blade in Fig. 6 as viewed from the radial direction.

Furthermore, although the sub inlet 29 is provided at one position in the present embodiment, the sub inlet may be provided at a plurality of positions.
In this case, the rotational power can be recovered from the low-boiling-point media having three or more different pressures by the single radial turbine wheel 15. Accordingly, the number of components can be further reduced, and the manufacturing cost can be further lowered.

The present embodiment has been described by applying the expansion turbine 1 to the binary power generation system 3 having the two binary cycles 7A and 7B. However, the expansion turbine 1 may be also applied to another system.
For example, the expansion turbine 1 may be applied to the binary power generation system 3 having one binary cycle 7C as shown in Fig. 9. In this case, the expansion turbine 1 recovers power by extracting the low-boiling-point media having different pressures from the binary cycle 7C.

The expansion turbine 1 may be also used in a plant system 2 shown in Fig. 10. In the plant system 2, the expansion turbine 1 recovers power by extracting vapor (fluid) having a plurality of, e.g., three different pressures from, for example, a boiler plant 4.
Examples of the plant system 2 include various industrial plants. For example, the expansion turbine 1 may be used in a mixing process of separation or mixture in a chemical plant.

### {Second Embodiment}

Next, the radial turbine 100 according to a second embodiment of the present invention will be described based on Fig. 11.
In the present embodiment, the configuration of the turbine wheel differs from that of the first embodiment. The different portion will be mainly described below, and the overlapping description on the same portion as that of the aforementioned first embodiment will be omitted.
The same members as those of the first embodiment are assigned the same reference numerals.

Fig. 11 is a partial sectional view illustrating the radial turbine 100 according to the second embodiment of the present invention.
In the present embodiment, a radial turbine wheel 41 is used as the turbine wheel instead of the radial turbine wheel 15 according to the first embodiment in which a hub surface at the inlet is in the radial direction. In the radial turbine wheel 41, a hub surface at the inlet is inclined. The radial turbine wheel 41 includes a plurality of blades 43 that are radially provided at intervals on the outer circumferential surface of the hub 17. The hub surface of the hub 17 at the inlet is inclined to the radial direction. A main inflow passage 45 is correspondingly inclined at an angle α1 to the radial direction. A sub inflow passage 47 is correspondingly inclined at an angle α2 to the radial direction.
A nozzle 46 composed of a plurality of blades that are circumferentially arranged at intervals is provided at the main inflow passage 45. A nozzle 48 composed of a plurality of blades that are circumferentially arranged at intervals is provided at the sub inflow passage 47.

Since the operation of the radial turbine 100 according to the present embodiment having the above configuration is basically the same as that of the radial turbine 100 according to the first embodiment, the overlapping description is omitted here.
In the present embodiment, since the outer circumferential side of the blade 43 is inclined to the radial direction, an axial length of the outer circumferential portion can be extended. Thus, a larger space can be ensured for the sub inlet 29, and the sub inlet 29 is easily formed therein.

Accordingly, it becomes easy to place the sub inlet 29 at a plurality of positions. For example, a sub inlet 51 can be easily provided in addition to the sub inlet 29 as shown in Fig. 12.
In this case, the rotational power can be recovered from the low-boiling-point media having three or more different pressures by the single mixed flow turbine wheel 41. Accordingly, the number of components can be further reduced, and the manufacturing cost can be further lowered. A sub inflow passage 53 is formed on the outer circumferential side from the sub inlet 51 at the position of a radius R3. A low-boiling-point medium having a lower pressure than the pressure P2 is introduced into the sub inflow passage 53. The sub inflow passage 53 and the sub inlet 51 are connected via an inlet flow passage 55 that is a doughnut-like space.
A nozzle 57 composed of a plurality of blades that are circumferentially arranged at intervals is provided at the inlet flow passage 55.
In this case, the rotational power can be recovered from the low-boiling-point media having three or more pressures by the single radial turbine wheel 41. Accordingly, the number of components can be further reduced, and the manufacturing cost can be further lowered.

When the nozzle placed at the sub inlet 29 or the sub inlet 51 is inclined to the radial direction, the flow of the low-boiling-point medium flowing in from the sub inlet 29 or the sub inlet 51 is made substantially parallel to the flow toward the outlet of the radial turbine wheel 41 from an upstream side. A mixture loss of the low-boiling-point medium can be thereby reduced. Accordingly, the turbine efficiency of the radial turbine 100 can be improved.

Although a shroud is not mounted in the present embodiment, a shroud may be mounted as shown in Figs. 4 and 5 to reduce a leakage loss.
The number of sub inlets 29 and 51 may be also increased.

The present invention is not limited to the respective embodiments described above, and various changes may be made therein without departing from the scope of the invention.

### {Reference Signs List}

- 1: Expansion turbine
- 15: Radial turbine wheel
- 19: Radial blade
- 21: Main inlet
- 27: Nozzle
- 29: Sub inlet
- 35: Nozzle
- 41: Radial turbine wheel
- 43: Blade
- 45: Main inflow passage
- 46: Nozzle
- 48: Nozzle
- 51: Sub inlet
- 57: Nozzle
- 100: Radial turbine

## Claims

1. A radial turbine comprising a single turbine wheel which converts, into rotational power, swirling energy of a swirling fluid with a first pressure that flows into the turbine wheel from a main inlet formed at an outer circumferential end through a high-speed swirling flow generating flow passage such as a nozzle and a scroll with a radial flow velocity component as a main component,
wherein a plurality of sub inlets are formed on an outer circumferential side of the turbine wheel at positions radially and axially apart from the main inlet and each other, and
swirling fluid whose pressure gradually decreases from the first pressure as fluid travels to a radial inner side flows into each of the sub inlets through a high-speed swirling flow generating flow passage such as a nozzle and a scroll.

2. The radial turbine according to claim 1, wherein a shroud is provided between the main inlet and the sub inlet located on an outermost side in the turbine wheel.

3. The radial turbine according to claim 1 or 2, wherein a shroud is provided between the respective sub inlets in the turbine wheel.

4. The radial turbine according to any of claims 1 to 3, wherein a shroud is provided between the sub inlet located on an innermost side and a discharge section in the turbine wheel.
